# EUROPÄISCHE PATENTSCHRIFT

(11) **EP 2 984 429 B1**
(45) Veröffentlichungstag und Bekanntmachung des Hinweises auf die Patenterteilung: **06.09.2017**
(21) Anmeldenummer: 14715019.7
(22) Anmeldetag: 04.04.2014
(51) Int. Cl.: F26B 15/00, F26B 23/00

(54) **BANDTROCKNER MIT EINEM TROCKNUNGSRAUM UND MIT EINER KÜHLKAMMER**
BELT DRYER WITH A DRYING AREA AND WITH A COOLING CHAMBER
SÉCHOIR À BANDE TRANSPORTEUSE COMPORTANT UNE CHAMBRE DE SÉCHAGE ET UNE CHAMBRE DE REFROIDISSEMENT

(30) Priorität: 10.04.2013 DE 102013206272
(43) Veröffentlichungstag der Anmeldung: 17.02.2016
(73) Patentinhaber: KBA-MetalPrint GmbH, 70435 Stuttgart (DE)
(72) Erfinder: KURZ, Peter, DE/73663 Berglen (DE)
(74) Vertreter: Koenig & Bauer AG
(86) Internationale Anmeldenummer: PCT/EP2014/056801
(87) Internationale Veröffentlichungsnummer: WO 2014/166831

(56) Entgegenhaltungen:
- DE-A1- 1 508 510
- DE-C1- 3 540 764
- DE-C1- 3 822 703

## Beschreibung

Bandtrockner mit einem Trocknungsraum und mit einer Kühlkammer Die Erfindung betrifft einen Bandtrockner mit einem Trocknungsraum und mit einer Kühlkammer gemaß dem Oberbegriff des Anspruchs 1. DE3540764 C1 offenbart einen derartigen Bandtrockner. Ein Bandtrockner ist ein Apparat der thermischen Verfahrenstechnik zum kontinuierlichen Trocknen und gegebenenfalls auch Kühlen von Nassgut mit Hilfe von Luft, Inertgas oder Rauchgas. Ein Bandtrockner weist einen Einlaufkopf, einen Trocknungsraum mit mindestens einer Trocknungskammer bzw. mit mindestens einer Trocknungszelle und einen Auslaufkopf auf. Das Nassgut wird im oder am Einlaufkopf auf mindestens einem insbesondere horizontal angeordneten, z. B. perforierten Trocknungsband aufgegeben und durchläuft i. d. R. kontinuierlich und gleichmäßig den zumeist mehrere Trocknungskammern aufweisenden Trocknungsraum. Dabei wird das Nassgut von Heizgasen durchströmt bzw. überströmt und dadurch getrocknet. Am Auslaufkopf wird das getrocknete Nassgut vom Trocknungsband wieder abgenommen. Die mindestens eine Trocknungskammer ist mit einem Ventilator zur Erzeugung von Umluft und mit mindestens einem Heizelement bzw. Heizregister ausgerüstet. Im Falle mehrerer Trocknungskammern ist vorzugsweise jede dieser Kammern jeweils mit einem Ventilator zur Erzeugung von Umluft in der betreffenden Trocknungskammer und mit mindestens einem Heizelement bzw. Heizregister ausgerüstet. Dadurch kann jede Trocknungskammer bezüglich der in ihr vorhandenen Temperatur und/oder Strömung, insbesondere Luftströmung, individuell gesteuert werden. Somit kann die jeweilige Strömungsgeschwindigkeit der das betreffende Nassgut anströmenden Trocknungs- und/oder Kühlungsluft z. B. in der betreffenden oder in jeder Trocknungskammer variiert werden. Darüber hinaus kann auch z. B. die Transportgeschwindigkeit des durch den Trocknungsraum transportierten Nassguts variiert werden, womit ein zusätzlicher Parameter für eine Einstellung der Trocknungszeit des Nassguts gegeben ist. Die Beheizung oder Kühlung der Trocknungskammern kann entweder direkt oder indirekt erfolgen. Als Heizmedium ist z. B. Öl, Dampf, Warmwasser oder insbesondere ein Heizgas einsetzbar. Für die Ausführung des Trocknungsprozesses ist es notwendig sicher zu stellen, dass eine bestimmte Menge an Abluft aus dem Trocknungsraum abgeführt wird. Um im Trocknungsraum trotz abzuführender Abluft einen bestimmten Wert für den vorgesehenen Luftdruck zumindest annähernd konstant zu halten, wird die abgeführte Luft durch andere Luft z. B. aus der Umgebung des Bandtrockners ersetzt. Eine Mindestmenge an Abluft ergibt sich somit aus im Trocknungsraum des Bandtrockners aufrecht zu erhaltenen Luftdrücken sowie Luftströmungen.

Ein Bandtrockner wird z. B. verwendet, um Dosen zu trocknen, insbesondere aus einem metallischem Werkstoff, z. B. aus Aluminium oder Stahl gefertigte Dosen. Derartige Dosen werden als Behältnisse z. B. für Getränke oder Nahrungsmittel verwendet. Insbesondere bei einer Verwendung der Dosen in der Getränke abfüllenden oder Nahrungsmittel verpackenden Industrie ist ein Trocknungsprozess z. B. dann erforderlich, wenn die Getränkedosen nach einem Umformen ihres metallischen Ausgangsmaterials durch eine Waschanlage gefahren werden, um von ihrem jeweiligen Dosenkörper ein beim Umformen verwendetes Ziehmittel zu entfernen. In der Waschanlage werden die Dosen z. B. mit Wasser benetzt, wobei das Wasser im Bandtrockner beim Durchgang der Dosen durch denselben verdampft wird. Des Weiteren ergibt sich die Notwendigkeit für einen Trocknungsprozess beispielsweise auch dann, wenn die Dosen z. B. innenseitig mit einem Lack beschichtet werden, um ihre chemische Resistenz zu verbessern, so dass sie insbesondere korrosionsfest und/oder säurebeständig ausgebildet sind und schadlos z. B. mit diversen Flüssigkeiten und/oder Kohlensäure in Kontakt gebracht werden können. Im Unterschied zu einer Trocknung nur mit Wasser benetzter Dosen ist beim Trocknen lackierter Dosen und/oder beim Aushärten ihres Lackes eine Freisetzung von Lösemitteln aus dem betreffenden Lack und damit ein Explosionsschutz für den Bandtrockner zu berücksichtigen.

Ein Bandtrockner, der beim Trocknen lackierter Dosen und/oder beim Aushärten ihres Lackes verwendet wird, weist z. B. einen Trocknungsraum mit mehreren, insbesondere drei Trocknungskammern auf und ist explosionssicher ausgebildet. Die jeweiligen Trocknungskammern sind dabei hinsichtlich der Temperatur der in ihnen jeweils für den Trocknungsprozess verwendeten Luft vorzugsweise einzeln und unabhängig voneinander einstellbar. Beispielsweise ist der Bandtrockner derart ausgebildet, dass in die erste Trocknungskammer eingebrachte Dosen durch ein in dieser Trocknungskammer wirkendes direkt beheiztes Umluftsystem auf eine Temperatur von z. B. 120°C bis 140°C aufgeheizt werden, um ihnen anhaftendes Wasser und z. B. auch niedrig siedende Lösemittel zu verdampfen. In der zweiten Trocknungskammer werden die Dosen weiter aufgeheizt, z. B. auf eine Temperatur von ca. 200°C, um je nach Zusammensetzung der verwendeten Lacke und/oder einer Transportgeschwindigkeit dieser Dosen durch diese zweite Trocknungskammer auch höher siedende Lösemittel zu verdampfen. In der dritten Trocknungskammer wird der an den Dosen aufgetragene Lack ausgehärtet, indem die Dosen auf einer Temperatur von ca. 200°C gehalten werden. Das verdampfte Wasser und/oder die freigesetzten Lösemittel werden durch die Abluft aus der jeweiligen Trocknungskammer abgeführt, wobei das Volumen der Abluft durch frische Luft z. B. aus der Umgebung des Bandtrockners ersetzt wird, wodurch auch verhindert wird, dass sich im Innern des Trocknungsraums ein Unterdruck ausbildet. Ferner kann vorgesehen sein, dass die Dosen im Anschluss an die dritte Trocknungskammer noch einer Kühlkammer zugeführt werden und dort eine Kühlzone durchlaufen, um ihre Temperatur auf einen deutlich niedrigeren Wert abzusenken, damit die Dosen für ihren weiteren Transport und/oder ihre weitere Verwendung geeignet sind.

Durch die DE 857 925 B ist ein Verfahren zum Trocknen von vorwiegend lackierten Blechdosenrümpfen mittels heißer, die Gutstransportfläche durchströmender Trockengase in Bandtrocknern bekannt.

Durch die DE 1 114 148 A ist ein Flachbahn-Durchlüftungstrockner mit einem in einem geschlossenen Kreislauf umgewälztem Trocknungsmittel bekannt.

Durch die DE 38 22703 C1 ist ein Luftkanalsystem mit einem Ventilator zum Lüften und/oder Heizen einer Mehrzahl von bei Betrieb Trocknungsgut enthaltenden Trocknungskammern bekannt, wobei jeder Kammer mindestens ein an die Druckseite des Ventilators anzuschließender Kammereinlass als Abzweig einer vom Ventilator kommenden Hauptdruckleitung zugeordnet ist, wobei die Hauptdruckleitung an jeder Trocknungskammer eine schaltbare Verbindungszweigleitung einer zur Saugseite des Ventilators führenden Hauptsaugleitung besitzt.

Durch die DE 44 47 311 C1 ist ein Verfahren zur energieeinsparenden und umweltverträglichen Trocknung von Futterstoffen und/oder feuchten Erntegütern in Trocknungsanlagen mit Bandförderung bekannt, wobei a) mindestens zwei gegeneinander gerichtete Strömungszonen erwärmter Luft das zu trocknende Gut behandeln, wobei die Förderrichtung des Gutes zuerst die Strömungszone des Gleichstromes und danach die Strömungszone des Gegenstromes durchläuft, wobei b) die Anfangstemperaturen und Luftmengen beider Zonen geregelt werden können, wobei mehrere Messwertgeber eine optimale Einstellung, automatisch oder von Handeinstellung ermöglichen, wobei c) die ausgeleitete, feuchte Trocknungsluft und gegebenenfalls auch sonstige entstandene Prozesswärme einer Abwärmerückgewinnung zur Vorwärmung der Eingangsluft zugeführt werden. Dabei passiert das getrocknete Gut vor Austritt aus der Trockenkammer vorzugsweise eine Kühlzone, wobei die zum Kühlen erforderliche Frischluft im Gegenstrom zur Förderrichtung durch das Trockengut eingeleitet wird und sodann in angewärmtem Zustand der Trockenluft beigemischt wird. Eine Vorrichtung zur Durchführung des vorgenannten Verfahrens besteht aus einer langgezogenen Trockenkammer, bei welcher an einem Eingang A und an einem Ausgang B ein Warmluftstrom aus einem Lufterhitzer eingeleitet wird, der durch versetzt angeordneten Luftleitsegmente in mäandrierendem Richtungswechsel durch eine Trockenbandfläche geführt wird, etwa in der Mitte durch einen Absaugventilator gemeinsam angesaugt wird und über einen Wärmetauscher ins Freie abgeblasen wird.

Der Erfindung liegt die Aufgabe zugrunde, einen Bandtrockner mit einem Trocknungsraum und mit einer Kühlkammer mit verbesserter Energieeffizienz zu schaffen.

Die Aufgabe wird erfindungsgemäß durch die Merkmale des Anspruches 1 gelöst.

Die mit der Erfindung erzielbaren Vorteile bestehen insbesondere darin, dass ein Bandtrockner mit einem Abluftsystem bereitgestellt wird, welches bei der Bereitstellung von Trocknungswärme, d. h. von Energie zum Betreiben eines Heizelementes, in erheblichem Umfang Einsparungen am Heizmedium ermöglicht und dadurch die Energieeffizienz des Bandtrockners verbessert. Das vorgeschlagene Abluftsystem sorgt für eine optimale Spülung des Trocknungsraums des Bandtrockners und hält ihn sauber, während nur die zur Ausführung des Trocknungsprozesses wirklich notwendige Menge an Abluft aus dem Trocknungsraum abgeführt wird. Ein Spülzyklus kann dabei von einer Steuereinheit derart eingestellt und bei Bedarf nachgeregelt werden, dass die aus dem Trocknungsraum abzuführende Luft hinsichtlich ihrer relativen Feuchtigkeit innerhalb eines vorgegebenen oder zumindest vorgebbaren Sollwertbereiches liegt. Es ist von Vorteil, dass das gefundene Abluftsystem auch an bestehenden Trocknungsanlagen nachrüstbar ist.

Ein Ausführungsbeispiel der Erfindung ist in den Zeichnungen dargestellt und wird im Folgenden näher beschrieben.

Es zeigen:
- Fig. 1: einen ersten Betriebszustand eines Abluftsystems eines Bandtrockners;
- Fig. 2: einen zweiten Betriebszustand des Abluftsystems des Bandtrockners;
- Fig. 3: einen Bandtrockner mit drei Trocknungskammern und einer Kühlzone.

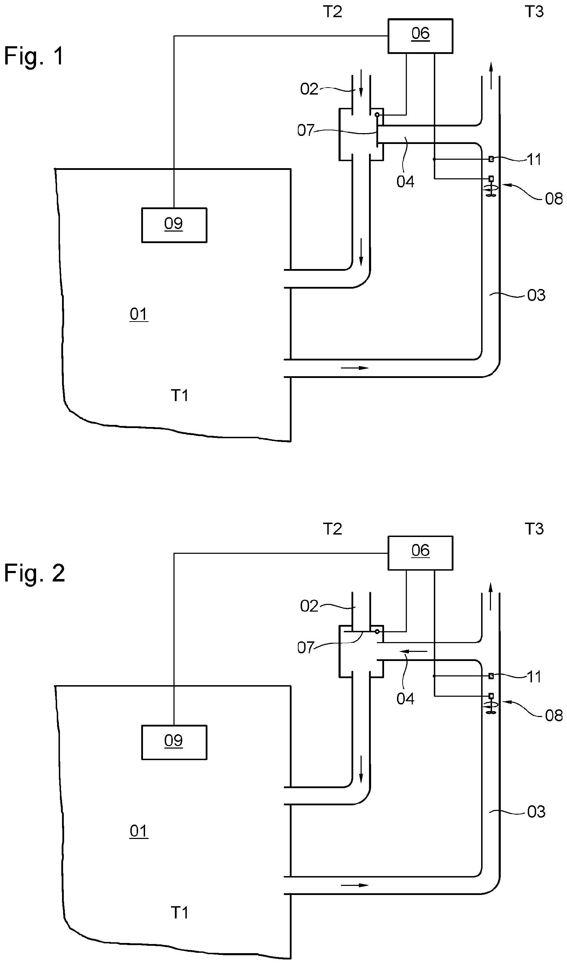

Die Fig. 1 und 2 zeigen stark vereinfacht jeweils in einem Teilschnitt einer Seitenansicht einen Trocknungsraum 01 eines Bandtrockners, wobei an den Trocknungsraum 01 mindestens ein Zuluftkanal 02 zum Zuführen von Luft in den Trocknungsraum 01 und mindestens ein Abluftkanal 03 zum Abführen von Luft aus dem Trocknungsraum 01 angeschlossen sind. Der in der bevorzugten Anwendung zur Trocknung von gewaschenen oder lackierten Dosen, vorzugsweise Getränkedosen, insbesondere Blechdosen verwendete Bandtrockner ist z. B. in einer Halle eines Gebäudes aufgestellt, so dass der mindestens eine Zuluftkanal 02 Luft aus der Halle dem Trocknungsraum 01 zuführt und der mindestens eine Abluftkanal 03 aus dem Trocknungsraum 01 abzuführende Luft z. B. über ein Dach der Halle abführt. Im Trocknungsraum 01 ist z. B. ein von mindestens einem Heizelement direkt beheiztes Umluftsystem ausgebildet, wobei ein im Trocknungsraum 01 angeordneter, nicht dargestellter Umluftventilator dort befindliche Luft umwälzt. Im Trocknungsraum 01 ist eine zur Ausführung eines Trocknungsprozesses erforderliche Prozesstemperatur T1 von im Bereich z. B. von 180°C bis 200°C eingestellt. Die den Bandtrockner umgebende Luft, z. B. die Luft in der Halle, hat eine Temperatur T2 im Bereich von z. B. 20°C bis 25°C. Zwischen dem mindestens einen Abluftkanal 03 und dem mindestens einen Zuluftkanal 02 ist mindestens ein die vorgenannten Kanäle 02; 03 miteinander verbindender Rückführungskanal 04 vorgesehen, wobei dieser Rückführungskanal 04 vorzugsweise außerhalb des Trocknungsraums 01 angeordnet ist. Die über den mindestens einen Abluftkanal 03 aus dem Trocknungsraum 01 abgeführte Luft hat eine Temperatur T3 von z. B. 160°C. Die entweder über den Zuluftkanal 02 und/oder den Rückführungskanal 04 jeweils in den Trocknungsraum 01 geführte Luft weist somit stets eine geringere Temperatur T2; T3 auf als die im Trocknungsraum 01 vorgesehene Prozesstemperatur T1.

Um die Energieeffizienz des Bandtrockners zu verbessern, ist z. B. im Zuluftkanal 02 oder im Rückführungskanal 04 ein z. B. von einer Steuereinheit 06 gesteuertes Stellelement 07 angeordnet, wobei mit dem Stellelement 07 eine Menge der über den Rückführungskanal 04 vom Abluftkanal 03 in den Zuluftkanal 02 zurückgeführten oder zumindest zurückführbaren Luft und/oder eine Dauer für die Rückführung der über den Rückführungskanal 04 vom Abluftkanal 03 in den Zuluftkanal 02 zurückgeführten oder zumindest zurückführbaren Luft eingestellt oder zumindest einstellbar sind. Das Stellelement 07 ist z. B. als eine pneumatisch oder elektrisch verstellbare Klappe ausgebildet. Das z. B. als Klappe ausgebildete Stellelement 07 nimmt abwechselnd mindestens zwei stabile Betriebsstellungen ein, wobei dieses Stellelement 07 in seiner einen Betriebsstellung, wie in der Fig. 1 dargestellt, den Rückführungskanal 04 verschließt und den Zuluftkanal 02 öffnet, und in seiner anderen Betriebsstellung, wie in der Fig. 2 dargestellt, den Rückführungskanal 04 öffnet und den Zuluftkanal 02 verschließt. Im Abluftkanal 03 ist vorzugsweise ein von der Steuereinheit 06 gesteuerter oder zumindest steuerbarer Ventilator 08 zum Fördern der Abluft angeordnet, wobei die Rotation dieses Ventilators 08 durch einen Ringpfeil angedeutet ist. In den Fig. 1 und 2 sind die jeweiligen Luftströmungen jeweils durch Richtungspfeile angedeutet. Die Menge der über den Rückführungskanal 04 vom Abluftkanal 03 in den Zuluftkanal 02 zurückgeführten oder zumindest zurückführbaren Luft beträgt z. B. 1.000 bis 1.500 m³/h je Trocknungskammer des Trocknungsraums 01.

Im Fall der Steuerung des Stellelementes 07 durch die Steuereinheit 06 steuert die Steuereinheit 06 das Stellelement 07 in einem z. B. in einem Programm voreingestellten oder zumindest voreinstellbaren Zyklus, wobei dieser Zyklus auch als Spülzyklus bezeichnet wird. Dieser Zyklus ist bzw. wird vorzugsweise derart eingestellt, dass das Stellelement 07 für eine erste Dauer Δt1 in seiner ersten Betriebsstellung eingestellt ist, so dass während dieser ersten Dauer Δt1 der Rückführungskanal 04 verschlossen und der Zuluftkanal 02 geöffnet ist, und das Stellelement 07 für eine zweite Dauer Δt2 in seiner zweiten Betriebsstellung eingestellt ist, so dass während dieser zweiten Dauer Δt2 der Rückführungskanal 04 geöffnet und der Zuluftkanal 02 verschlossen ist. Die erste Dauer Δt1 für die erste Betriebsstellung des Stellelementes 07 und die zweite Dauer Δt2 für die zweite Betriebsstellung des Stellelementes 07 werden von der Steuereinheit 06 abwechselnd aufeinander eingestellt. Die erste Dauer Δt1 für die erste Betriebsstellung des Stellelementes 07 beträgt z. B. 5 bis 10 Minuten und wird als Spülzeit bezeichnet, wohingegen die zweite Dauer Δt2 für die zweite Betriebsstellung des Stellelementes 07 z. B. 1 bis 3 Stunden betragen kann und als Rückführzeit bezeichnet wird. In einer vorteilhaften Ausbildung des zum Trocknen gewaschener Dosen 17 verwendeten Bandtrockners ist die erste Dauer Δt1 für die erste Betriebsstellung des Stellelementes 07 und/oder die zweite Dauer Δt2 für die zweite Betriebsstellung des Stellelementes 07 z. B. von der Steuereinheit 06 jeweils z. B. in Abhängigkeit von der relativen Feuchtigkeit der Abluft eingestellt, wobei im Fall der automatischen Einstellung ein z. B. im Abluftkanal 03 angeordneter, die relative Feuchtigkeit der Abluft erfassender Messfühler 11 mit der Steuereinheit 06 verbunden ist. Die Abluft soll eine relative Feuchtigkeit vorzugsweise im Bereich von 3% bis 5% aufweisen. Die erste Dauer Δt1 für die erste Betriebsstellung des Stellelementes 07 und/oder die zweite Dauer Δt2 für die zweite Betriebsstellung des Stellelementes 07 ist von Steuereinheit 06 jeweils in Abhängigkeit von einem z. B. vom Messfühler 11 bereitgestellten Messwert vorzugsweise derart eingestellt, dass die über den mindestens einen Abluftkanal 03 aus dem Trocknungsraum 01 abzuführende Luft hinsichtlich ihrer relativen Feuchtigkeit innerhalb dieses zuvor festgelegten Sollwertbereiches liegt. Bei Bedarf verändert die Steuereinheit 06 in Form einer Nachregelung die erste Dauer Δt1 für die erste Betriebsstellung des Stellelementes 07 und/oder die zweite Dauer Δt2 für die zweite Betriebsstellung des Stellelementes 07, so dass für die aus dem Trocknungsraum 01 abzuführende Luft hinsichtlich ihrer relativen Feuchtigkeit der angestrebte Sollwertbereich eingehalten wird.

Durch die Steuerung des Stellelementes 07 in der zuvor beschriebenen Weise lässt sich Heizmedium im bedeutsamen Maße einsparen, was folgende Beispielrechnung verdeutlicht:

Um für eine Trocknungskammer des Trocknungsraums 01 1000 m³ Luft pro Stunde in der Spülzeit von T2 = 25°C auf die Prozesstemperatur T1 = 180°C zu erwärmen, werden 44 kWh Energie benötigt.

Um für eine Trocknungskammer des Trocknungsraums 01 1000 m³ Luft pro Stunde in der Rückführzeit von T3 = 160°C auf die Prozesstemperatur T1 = 180°C zu erwärmen, werden 6 kWh Energie benötigt.

Stellt man nun an der Steuereinheit 06 einen Zyklus von sich abwechselnder Spülzeit und Rückführzeit ein, bei dem die Spülzeit z. B. 5 Minuten und die Rückführzeit z. B. 55 Minuten betragen, werden in der Spülzeit ca. 3,6 kWh Energie und in der Rückführzeit ca. 5 kWh Energie benötigt, in Summe also ca. 8,6 kWh Energie. Gegenüber einem Prozess ohne Rückführung, bei welchem die dem Trocknungsraum 01 zuzuführende Luft permanent von der Umgebungstemperatur T2 = 25°C auf die Prozesstemperatur T1 = 180°C erwärmt wird und welcher Prozess z. B. 44 kWh Energie benötigt, ergibt sich eine Energieersparnis von 35,4 kWh oder ca. 80% je Trocknungskammer des Trocknungsraums 01. Wenn als Heizmedium z. B. ein Heizgas, z. B. Erdgas verwendet wird, lassen sich somit für eine oder jede Trocknungskammer des Trocknungsraums 01 rund 3,5 m³/h Erdgas einsparen.

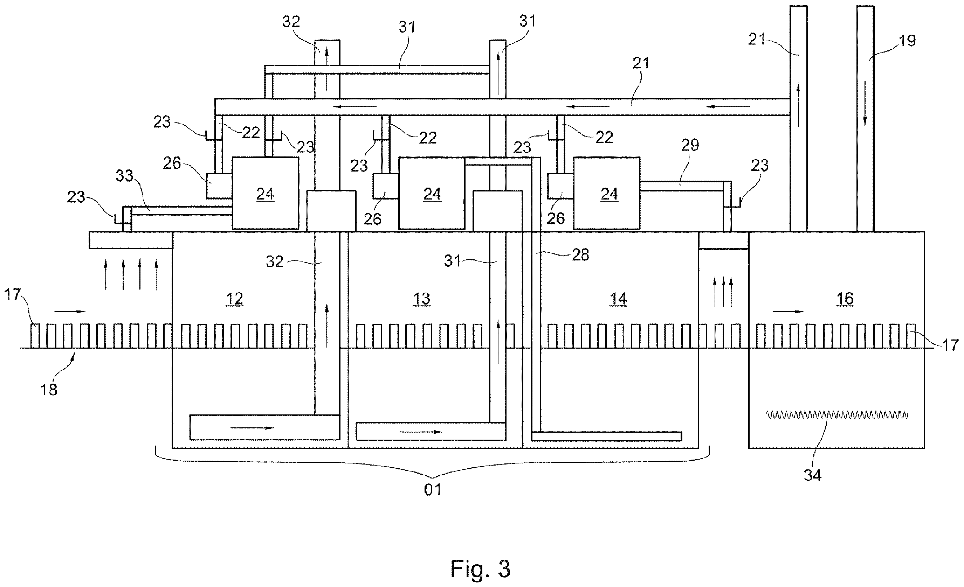

Fig. 3 zeigt schematisch einen z. B. in einer Halle eines Gebäudes angeordneten Bandtrockner mit einem Trocknungsraum 01, wobei dieser Trocknungsraum 01 mehrere, z. B. drei nacheinander angeordnete Trocknungskammern 12; 13; 14 aufweist, und mit einer der letzten, hier dritten Trocknungskammer 14 nachgeordneten Kühlkammer 16. Mehrere Dosen 17, vorzugsweise Blechdosen, z. B. Getränkedosen, insbesondere lackierte Dosen 17, werden auf einem horizontal angeordneten, z. B. perforierten Trocknungsband 18 aneinander gereiht vorzugsweise kontinuierlich durch den Trocknungsraum 01 und die Kühlkammer 16 hindurchgeführt. In der Fig. 3 ist die Transportrichtung der Dosen 17 durch den Trocknungsraum 01 und die Kühlkammer 16 durch einen Pfeil angedeutet. Jede der z. B. drei Trocknungskammern 12; 13; 14 weist jeweils ein z. B. direkt beheiztes Umluftsystem auf, wobei in jeder Trocknungskammer 12; 13; 14 das jeweilige Heizelement 09 von der Steuereinheit 06 unabhängig von dem Heizelement 09 in einer anderen Trocknungskammer 12; 13; 14 auf eine bestimmte Temperatur eingestellt oder zumindest einstellbar ist. In der in Transportrichtung der Dosen 17 ersten Trocknungskammer 12 ist eine Prozesstemperatur von z. B. 140°C eingestellt. In der zweiten Trocknungskammer 13 und in der dritten Trocknungskammer 14 sind jeweils eine Prozesstemperatur von z. B. 200°C eingestellt. Die jeweilige in verschiedenen Trocknungskammern 12; 13; 14 vorhandene Luft kann somit auf eine gleiche Temperatur oder auf unterschiedliche Temperaturen erwärmt sein. Es wird angenommen, dass die Luft in der Halle eine Temperatur im Bereich von z. B. 20°C bis 25°C aufweist. Die Kühlkammer 16 weist einen Zuluftkanal 19 auf, mittels welchem Luft aus der Halle, also den Bandtrockner umgebende Luft, in die Kühlkammer 16 geleitet wird. Die der Kühlkammer 16 von außen zugeführte Luft wird aus mindestens einem vorzugsweise unterhalb der Dosen 17 angeordneten Auslass 34 gegen die zuvor in den Trocknungskammern 12; 13; 14 aufgeheizten Dosen 17 geführt, so dass diese Luftströmung einen großen Teil der thermischen Energie dieser Dosen 17 aufnimmt und dabei die durch die Kühlkammer 16 geführten Dosen 17 abkühlt. Die die Dosen 17 umströmende Luft erwärmt sich durch den Wärmetausch ausgehend von der in der Halle herrschenden Temperatur im Bereich von z. B. 20°C bis 25°C auf eine Temperatur im Bereich von z. B. 60°C bis 80°C. Es ist vorteilhaft, diese in der Kühlkammer 16 durch die zuvor aufgeheizten Dosen 17 erwärmte Luft mittels eines Abluftkanals 21 zumindest teilweise mindestens einer der vorgeordneten Trocknungskammern 12; 13; 14 zuzuführen. In der bevorzugten Ausführung ist bzw. wird mehreren, vorzugsweise jeder der der Kühlkammer 16 vorgeordneten Trocknungskammern 12; 13; 14 jeweils mittels einer vom Abluftkanal 21 abzweigenden Zuleitung 22 ein jeweils im Volumen einstellbarer Teil der in der Kühlkammer 16 durch die zuvor aufgeheizten Dosen 17 erwärmten Luft zugeführt. Die von der Kühlkammer 16 in die jeweilige Trocknungskammer 12; 13; 14 geleitete Luft wird z. B. über das jeweilige in der betreffenden Trocknungskammer 12; 13; 14 angeordnete Heizelement 09 geführt, wobei dieses Heizelement 09 insbesondere bei der Verwendung von Heizgas als Heizmedium z. B. als ein Brennerflammrohr ausgebildet ist. Zur Einstellung des jeweiligen Volumens der der jeweiligen Trocknungskammer 12; 13; 14 aus der Kühlkammer 16 zuzuführenden Luft ist in der jeweiligen Zuleitung 22 zu der betreffenden Trocknungskammer 12; 13; 14 jeweils ein manuell oder fernbetätigbar z. B. von der Steuereinheit 06 eingestelltes oder zumindest einstellbares Stellelement 23 angeordnet. Jede Trocknungskammer 12; 13; 14 oder zumindest mehrere Trocknungskammern 12; 13; 14 weisen jeweils einen Lufteinlass 24 mit einem Anschlussstutzen 26 auf, an welchen Anschlussstutzen 26 die jeweilige vom Abluftkanal 21 abzweigende Zuleitung 22 jeweils angeschlossen ist, wobei z. B. in dem betreffenden Anschlussstutzen 26 oder in dem betreffenden Lufteinlass 24 jeweils ein Ventilator 27 angeordnet ist, mit welchem Ventilator 27 die durch die jeweilige vom Abluftkanal 21 abzweigende Zuleitung 22 geführte Luft aus der Kühlkammer 16 angesaugt wird oder zumindest ansaugbar ist. Die jeweilige Luftströmung durch den Abluftkanal 21 und die jeweiligen Zuleitungen 22 ist jeweils durch einen Pfeil angedeutet.

Die Trocknung der lackierten Dosen 17 ist zumeist abgeschlossen, nachdem die auf dem den Trocknungsraum 01 durchlaufenden Trocknungsband 18 aufgestellten Dosen 17 die in ihrer Transportrichtung erste Trocknungskammer 12 durchlaufen haben. Spätestens beim Durchlauf der Dosen 17 durch die zweite Trocknungskammer 13 ist deren Trocknungsprozess endgültig abgeschlossen. In der zweiten Trocknungskammer 13, deren Umluft, d. h. deren Prozesstemperatur z. B. auf 200°C eingestellt ist, verdampfen auch die im Lack enthaltenen höher siedenden Lösemittel. Die in der dritten Trocknungskammer 14 vorhandene Luft wird daher kaum bis gar nicht mit Wasserdampf und/oder Lösemitteldämpfen belastet. Die in der dritten Trocknungskammer 14 vorhandene Luft gilt daher im Vergleich zu den vorangegangenen beiden Trocknungskammern 12; 13 als "sauber". Dennoch ist auch aus der dritten Trocknungskammer 14 die durch die am Heizelement 09 ausgeführte Verbrennung verbrauchte Luft abzuführen und durch insbesondere sauerstoffreiche Luft zu ersetzen, um insbesondere bei der Verwendung von Heizgas als Heizmedium am z. B. als ein Brennerflammrohr ausgebildeten Heizelement 09 die Verbrennung in Gang zu halten und Luftdruckunterschiede im Trocknungsraum 01 und in seinem Luftführungssystem auszugleichen. Es trägt zur Energieeinsparung bei, wenn die in der dritten Trocknungskammer 14 immerhin noch ca. 180°C heiße Abluft über einen separaten Verbindungskanal 28 in die zweite Trocknungskammer 13 geleitet wird, wobei der separate Verbindungskanal 28 als ein Rückführungskanal ausgebildet ist, der nur, d. h. ohne Abzweig mit der unmittelbar vor der Kühlkammer 16 angeordneten Trocknungskammer 14 und mit der vor dieser Trocknungskammer 14 angeordneten Trocknungskammer 13 verbunden ist. Der separate Verbindungskanal 28 weist demnach keine direkte Verbindung ins Freie auf, d. h. er weist insbesondere keinen Abzweig zur Umgebung des Bandtrockners oder aus dem Gebäude, z. B. aus der Halle heraus auf, in welchem bzw. in welcher der Bandtrockner aufgestellt ist. Für das Absaugen der Abluft aus der dritten Trocknungskammer 14, d. h. der unmittelbar vor der Kühlkammer 16 angeordneten Trocknungskammer 14, ist i. d. R. ein Ventilator nicht erforderlich, weil ein im Bereich des in der zweiten Trocknungskammer 13 angeordneten Heizelementes 09 herrschender Unterdruck zur Erzeugung einer Luftströmung in Richtung dieser zweiten Trocknungskammer 13 zumeist ausreicht. Es kann vorgesehen sein, dass der dritten Trocknungskammer 14 über einen z. B. mit ihrem Lufteinlass 24 verbundenen weiteren Zuluftkanal 29 auch solche Luft zugeführt wird, die aus einem Bereich zwischen der dritten Trocknungskammer 14 und der ihr nachgeordneten Kühlkammer 16 abgesaugt wird, wobei ein Volumen dieser Zuluft mittels eines z. B. in diesem Zuluftkanal 29 angeordneten vorzugsweise fernsteuerbaren Stellelementes 23 eingestellt oder zumindest einstellbar ist.

Wenn der zweiten Trocknungskammer 13 Abluft aus der ihr in Transportrichtung des Trocknungsbandes 18 nachgeordneten dritten Trocknungskammer 14 zugeführt wird, ist aus dieser zweiten Trocknungskammer 13 über einen weiteren Abluftkanal 31 ein erhöhtes Volumen an Abluft abzuführen, wobei die aus der zweiten Trocknungskammer 13 abzuführende Abluft immerhin auch noch eine Temperatur von z. B. 180°C aufweist. In einer vorteilhaften Weiterbildung ist vorgesehen, zumindest einen Teil der über den weiteren Abluftkanal 31 aus der zweiten Trocknungskammer 13 abzuführenden Abluft der ersten Trocknungskammer 12 zuzuführen, wobei in einer vorteilhaften Ausbildung des Bandtrockners das der ersten Trocknungskammer 12 aus der zweiten Trocknungskammer 13 zuzuführende Volumen an Abluft von einem z. B. im weiteren Abluftkanal 31 angeordneten vorzugsweise fernsteuerbaren Stellelement 23 eingestellt oder zumindest einstellbar ist. Da zwischen der Temperatur der aus der zweiten Trocknungskammer 13 abzuführenden Abluft von z. B. 180°C und der Temperatur der in der ersten Trocknungskammer 12 vorhandenen Umluft von z. B. 140°C eine Temperaturdifferenz von z. B. 40°C besteht, ist hier ein weiteres Potenzial zur Energieeinsparung gegeben.

Die aus der ersten Trocknungskammer 12 abzuführende Abluft hat eine Temperatur von z. B. 120°C. Diese Abluft wird mittels eines separaten Abluftkanals 32 aus der ersten Trocknungskammer 12 abgeführt. Durch die Rückführung von Luft aus mindestens einer der der ersten Trocknungskammer 12 nachgeordneten Trocknungskammern 13; 14 vergrößert sich das Volumen der über den separaten Abluftkanal 32 aus der ersten Trocknungskammer 12 abzuführenden Abluft, was bei der Dimensionierung dieses Abluftkanals 32 zu berücksichtigen ist. Des Weiteren ist z. B. an dem Lufteinlass 24 der ersten Trocknungskammer 12 ein Zuluftkanal 33 angeschlossen, wobei mittels dieses Zuluftkanals 33 Luft aus der Umgebung des Bandtrockners angesaugt und in die erste Trocknungskammer 12 geleitet wird, wobei in einer vorteilhaften Ausbildung des Bandtrockners das Volumen der aus der Umgebung des Bandtrockners angesaugten Luft mittels eines z. B. im Zuluftkanal 33 angeordneten vorzugsweise fernsteuerbaren Stellelementes 23 eingestellt oder zumindest einstellbar ist. Dieses Stellelement 23 ist bei einem zum Trocknen lackierter Dosen 17 verwendeten Bandtrockner ebenso wie jedes andere der zuvor erwähnten Stellelemente 23 und/oder die Ventilatoren 08; 27 entweder manuell eingestellt oder zumindest einstellbar oder vorteilhafterweise jeweils von der z. B. elektrischen oder pneumatischen Steuereinheit 06 gesteuert oder zumindest steuerbar.

Insbesondere für die Verwendung zum Trocknen lackierter Dosen 17 ergibt sich demnach ein Bandtrockner mit einem Trocknungsraum 01 und mit einer Kühlkammer 16, wobei der Trocknungsraum 01 mehrere nacheinander angeordnete Trocknungskammern 12; 13; 14 aufweist und die Kühlkammer 16 der letzten Trocknungskammer 14 nachgeordnet ist, wobei die Kühlkammer 16 einen Zuluftkanal 19 aufweist, mittels welchem den Bandtrockner umgebende Luft in die Kühlkammer 16 geführt ist, wobei in der Kühlkammer 16 erwärmte Luft mittels eines Abluftkanals 21 zumindest teilweise mindestens einer der der Kühlkammer 16 vorgeordneten Trocknungskammern 12; 13; 14 zugeführt ist. Vorzugsweise ist vorgesehen, dass mehreren der Kühlkammer 16 vorgeordneten Trocknungskammern 12; 13; 14 jeweils mittels einer vom Abluftkanal 21 abzweigenden Zuleitung 22 ein jeweils im Volumen eingestellter oder zumindest einstellbarer Teil der in der Kühlkammer 16 erwärmten Luft zugeführt ist. Das Abluftsystem des Bandtrockners kann darüber hinaus derart ausgebildet sein, dass zumindest ein Teil der über einen Abluftkanal 28; 31 aus einer der Trocknungskammern 13; 14 abzuführenden Abluft der der betreffenden Trocknungskammer 13; 14 unmittelbar zuvor angeordneten Trocknungskammer 12; 13 zugeführt ist. Dabei ist üblicherweise in mindestens zwei verschiedenen Trocknungskammern 12; 13; 14 die jeweilige Prozesswärme auf unterschiedliche Temperaturen eingestellt. Ferner kann vorgesehen sein, dass an einer in Transportrichtung des den Trocknungsraum 01 durchlaufenden Trocknungsbandes 18 ersten Trocknungskammer 12 ein Zuluftkanal 33 angeschlossen ist, wobei mittels dieses Zuluftkanals 33 Luft aus der Umgebung des Bandtrockners angesaugt und in diese erste Trocknungskammer 12 geleitet ist.

### Bezugszeichenliste

- 01: Trocknungsraum
- 02: Zuluftkanal
- 03: Abluftkanal
- 04: Rückführungskanal
- 05: -
- 06: Steuereinheit
- 07: Stellelement
- 08: Ventilator
- 09: Heizelement
- 10: -
- 11: Messfühler
- 12: erste Trocknungskammer
- 13: zweite Trocknungskammer
- 14: dritte Trocknungskammer
- 15: -
- 16: Kühlkammer
- 17: Dose
- 18: Trocknungsband
- 19: Zuluftkanal
- 20: -
- 21: Abluftkanal
- 22: Zuleitung
- 23: Stellelement
- 24: Lufteinlass
- 25: -
- 26: Anschlussstutzen
- 27: Ventilator
- 28: Verbindungskanal
- 29: Zuluftkanal
- 30: -
- 31: Abluftkanal
- 32: Abluftkanal
- 33: Zuluftkanal
- 34: Auslass

- T1: Prozesstemperatur
- T2: Temperatur
- T3: Temperatur
- Δt1: Dauer
- Δt2: Dauer

## Patentansprüche

1. Bandtrockner mit einem Trocknungsraum (01) und mit einer Kühlkammer (16), wobei der Trocknungsraum (01) mehrere nacheinander angeordnete Trocknungskammern (12; 13; 14) aufweist und die Kühlkammer (16) der letzten Trocknungskammer (14) nachgeordnet ist, **dadurch gekennzeichnet, dass** in der Kühlkammer (16) erwärmte Luft mittels eines Abluftkanals (21) zumindest teilweise mindestens einer der der Kühlkammer (16) vorgeordneten Trocknungskammern (12; 13; 14) zugeführt ist, wobei zumindest ein Teil der über einen Abluftkanal (28; 31) aus einer der Trocknungskammern (13; 14) abzuführenden Abluft der der betreffenden Trocknungskammer (13; 14) unmittelbar zuvor angeordneten Trocknungskammer (12; 13) zugeführt ist, wobei die in der unmittelbar vor der Kühlkammer (16) angeordneten Trocknungskammer (14) erwärmte Abluft über einen separaten Verbindungskanal (28) in die unmittelbar vor dieser Trocknungskammer (14) angeordnete Trocknungskammer (13) eingeleitet ist, wobei der separate Verbindungskanal (28) als ein Rückführungskanal ausgebildet ist, der nur mit der unmittelbar vor der Kühlkammer (16) angeordneten Trocknungskammer (14) und mit der vor dieser Trocknungskammer (14) angeordneten Trocknungskammer (13) verbunden ist.

2. Bandtrockner nach Anspruch 1, **dadurch gekennzeichnet, dass** mehreren der Kühlkammer (16) vorgeordneten Trocknungskammern (12; 13; 14) jeweils mittels einer vom Abluftkanal (21) abzweigenden Zuleitung (22) ein jeweils im Volumen eingestellter oder zumindest einstellbarer Teil der in der Kühlkammer (16) erwärmten Luft zugeführt ist.

3. Bandtrockner nach Anspruch 2, **dadurch gekennzeichnet, dass** mehrere Trocknungskammern (12; 13; 14) jeweils einen Lufteinlass (24) aufweisen, an welchen Lufteinlass (24) die jeweilige vom Abluftkanal (21) abzweigende Zuleitung (22) jeweils angeschlossen ist.

4. Bandtrockner nach Anspruch 3, **dadurch gekennzeichnet, dass** in oder an dem betreffenden Lufteinlass (24) jeweils ein Ventilator (27) angeordnet ist, mit welchem Ventilator (27) die durch die jeweilige vom Abluftkanal (21) abzweigende Zuleitung (22) geführte Luft aus der Kühlkammer (16) angesaugt ist.

5. Bandtrockner nach Anspruch 1 und/oder 2 und/oder 3 und/oder 4, **dadurch gekennzeichnet, dass** in mindestens zwei verschiedenen Trocknungskammern (12; 13; 14) die jeweilige Prozesswärme auf unterschiedliche Temperaturen eingestellt ist.

6. Bandtrockner nach Anspruch 1 und/oder 2 und/oder 3 und/oder 4 und/oder 5, **dadurch gekennzeichnet, dass** der unmittelbar vor der Kühlkammer (16) angeordneten Trocknungskammer (14) über einen Zuluftkanal (29) Luft aus einem Bereich zwischen dieser Trocknungskammer (14) und der ihr nachgeordneten Kühlkammer (16) zugeführt ist.

7. Bandtrockner nach Anspruch 1 und/oder 2 und/oder 3 und/oder 4 und/oder 5 und/oder 6, **dadurch gekennzeichnet, dass** das der unmittelbar zuvor angeordneten Trocknungskammer (12; 13) aus der unmittelbar nachgeordneten Trocknungskammer (13; 14) über den betreffenden Abluftkanal (28; 31) zuzuführende Volumen an Abluft jeweils von einem Stellelement (23) eingestellt ist.

8. Bandtrockner nach Anspruch 1 und/oder 2 und/oder 3 und/oder 4 und/oder 5 und/oder 6 und/oder 7, **dadurch gekennzeichnet, dass** an einer in Transportrichtung eines den Trocknungsraum (01) durchlaufenden Trocknungsbandes (18) ersten Trocknungskammer (12) ein Zuluftkanal (33) angeschlossen ist, wobei mittels dieses Zuluftkanals (33) Luft aus der Umgebung des Bandtrockners in diese erste Trocknungskammer (12) geleitet ist.

9. Bandtrockner nach Anspruch 8, **dadurch gekennzeichnet, dass** das Volumen der aus der Umgebung des Bandtrockners über den Zuluftkanal (33) der ersten Trocknungskammer (12) zugeführten Luft mittels eines Stellelementes (23) eingestellt ist.

10. Bandtrockner nach Anspruch 1 und/oder 2 und/oder 3 und/oder 4 und/oder 5 und/oder 6 und/oder 7 und/oder 8 und/oder 9, **dadurch gekennzeichnet, dass** der Trocknungsraum (01) und die Kühlkammer (16) jeweils von einem Trocknungsband (18) durchlaufen sind.

11. Bandtrockner nach Anspruch 10, **dadurch gekennzeichnet, dass** auf dem Trocknungsband (18) lackierte Dosen (17) angeordnet sind, wobei diese Dosen (17) mittels des Trocknungsbandes (18) zuerst in den Trocknungsraum (01) und danach in die Kühlkammer (16) geführt sind.

12. Bandtrockner nach Anspruch 11, **dadurch gekennzeichnet, dass** in der Kühlkammer (16) ihr von außen zugeführte Luft gegen die zuvor in den Trocknungskammern (12; 13; 14) aufgeheizten Dosen (17) geführt ist, wobei diese Luftströmung einen Teil der thermischen Energie dieser Dosen (17) aufnimmt und dabei die durch die Kühlkammer (16) geführten Dosen (17) abkühlt.

13. Bandtrockner nach Anspruch 1 und/oder 2 und/oder 3 und/oder 4 und/oder 5 und/oder 6 und/oder 7 und/oder 8 und/oder 9 und/oder 10 und/oder 11 und/oder 12, **dadurch gekennzeichnet, dass** jede der Trocknungskammern (12; 13; 14) jeweils ein direkt beheiztes Umluftsystem aufweist.

14. Bandtrockner nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13, **dadurch gekennzeichnet, dass** jede der Trocknungskammern (12; 13; 14) jeweils ein Heizelement (09) aufweist, wobei in jeder Trocknungskammer (12; 13; 14) das jeweilige Heizelement (09) von einer Steuereinheit (06) unabhängig von dem Heizelement (09) in einer anderen Trocknungskammer (12; 13; 14) auf eine bestimmte Temperatur eingestellt oder zumindest einstellbar ist.

15. Bandtrockner nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13 und/oder 14, **dadurch gekennzeichnet, dass** der separate Verbindungskanal (28) keinen Abzweig zur Umgebung des Bandtrockners oder aus einem Gebäude heraus aufweist, in welchem Gebäude der Bandtrockner aufgestellt ist.

## Claims

1. A belt drier having a drying space (01) and a cooling chamber (16), wherein the drying space (01) has a plurality of successively arranged drying chambers (12; 13; 14) and the cooling chamber (16) is arranged downstream of the last drying chamber (14), **characterized in that** air heated in the cooling chamber (16) is at least partially fed into at least one of the drying chambers (12; 13; 14), arranged upstream of the cooling chamber (16), by means of an exhaust air duct (21), wherein at least a portion of the exhaust air to be discharged from one of the drying chambers (13; 14) via an exhaust air duct (28; 31) is fed into the drying chamber (12; 13) arranged immediately upstream of the concerned drying chamber (13; 14), wherein the exhaust air heated in the drying chamber (14) arranged directly upstream of the cooling chamber (16) is introduced into the drying chamber (13), which is arranged directly upstream of this drying chamber (14), via a separate connecting duct (28), wherein the separate connecting duct (28) is formed as a return duct which is connected only to the drying chamber (14) arranged directly upstream of the cooling chamber (16) and to the drying chamber (13) arranged upstream of this drying chamber (14).

2. The belt drier according to claim 1, **characterized in that** a portion of the air heated in the cooling chamber (16), which is adjusted, or at least adjustable in volume, is fed to several of the drying chambers (12; 13; 14), arranged upstream of the cooling chamber (16), by means of a feed line (22) each, branching off from the exhaust air duct (21).

3. The belt drier according to claim 2, **characterized in that** a several of the drying chambers (12; 13; 14) each have an air inlet (24), to which air inlet (24) the respective feed line (22), branching off from the exhaust air duct (21), is respectively connected.

4. The belt drier according to claim 3, **characterized in that** a fan (27) is arranged in or on each respective air inlet (24), with which fan (27) the air guided by the respective supply line (22), branching off the exhaust air duct (21), is sucked in from the cooling chamber (16).

5. The belt drier according to claim 1 and/or 2 and/or 3 and/or 4, **characterized in that** the respective process heat is adjusted to different temperatures in at least two different drying chambers (12; 13; 14).

6. The belt drier according to claim 1 and/or 2 and/or 3 and/or 4 and/or 5, **characterized in that** air is fed from a region between the drying chamber and the drying chamber (14) and the cooling chamber (16) downstream thereof to the drying chamber (14) arranged directly upstream of the cooling chamber (16) via a supply air duct (29).

7. The belt drier according to claim 1 and/or 2 and/or 3 and/or 4 and/or 5 and/or 6, **characterized in that** the volume of exhaust air to be fed to the immediately upstream drying chamber (12; 13) from the directly downstream drying chamber (13; 14) via the respective exhaust air duct (28; 31) is adjusted by an adjusting element (23).

8. The belt drier according to claim 1 and/or 2 and/or 3 and/or 4 and/or 5 and/or 6, and/or 7, **characterized in that** a supply air duct (33) is connected to a drying belt (18) of the first drying chamber (12), traversing the drying chamber (01) in the transport direction, wherein by means of this supply air duct (33), air is fed from the surroundings of the belt into this first drying chamber (12).

9. The belt drier according to claim 8, **characterized in that** the volume of the air, supplied from the surroundings of the belt drier via the supply air duct (33) of the first drying chamber (12) is adjusted by means of a adjusting element (23).

10. The belt drier according to claim 1 and/or 2 and/or 3 and/or 4 and/or 5 and/or 6 and/or 7 and/or 8 and/or 9 wherein the drying space (01) and the cooling chamber (16) are each traversed by a drying belt (18).

11. The belt drier according to claim 10, **characterized in that** painted cans (17) are arranged on the drying belt (18), wherein these cans (17) are first fed into the drying chamber (01), and subsequently into the cooling chamber (16), by means of the drying belt (18).

12. The belt drier according to claim 11, **characterized in that**, in the cooling chamber (16), air supplied to the same from outside is guided against the cans (17) previously heated in the drying chambers (12; 13; 14), wherein this air flow is absorbs a part of the thermal energy of these cans (17), thereby cooling the cans (17) fed through the cooling chamber (16).

13. The belt drier according to claim 1 and/or 2 and/or 3 and/or 4 and/or 5 and/or 6 and/or 7 and/or 8 and/or 9 and/or 10 and/or 11 and/or 12, **characterized in that** each of the drying chambers (12; 13; 14) has a directly heated circulating air system.

14. The belt drier according to claim 1 and/or 2 and/or 3 and/or 4 and/or 5 and/or 6 and/or 7 and/or 8 and/or 9 and/or 10 and/or 11 and/or 12 and/or 13,**characterized in that** each of the drying chambers (12; 13; 14) has a respective heating element (09), wherein the respective heating element (09) in each drying chamber (12; 13; 14) is adjusted, or at least adjustable, to a specific temperature independently from the heating element (09) in a different drying chamber (12; 13; 14) by a control unit (06).

15. The belt drier according to claim 1 and/or 2 and/or 3 and/or 4 and/or 5 and/or 6 and/or 7 and/or 8 and/or 9 and/or 10 and/or 11 and/or 12 and/or 13 and/or 14, **characterized in that** the separate connecting duct (28) does not have a branch to the surroundings of the belt drier or to the outside of a building, in which the belt drier is set up.

## Revendications

1. Séchoir à bande transporteuse comportant une chambre de séchage (01) et une chambre de refroidissement (16), la chambre de séchage (01) comprenant plusieurs compartiments de séchage (12 ; 13 ; 14) agencés les uns derrière les autres et le compartiment de refroidissement (16) étant monté en aval du dernier compartiment de séchage (14), **caractérisé en ce que** l'air chauffé dans la chambre de refroidissement (16) est amené au moyen d'un canal d'air évacué (21) au moins en partie à au moins un des compartiments de séchage (12 ; 13 ; 14) montés en amont de la chambre de refroidissement (16), au moins une partie de l'air évacué destiné à être évacué d'un des compartiments de séchage (13 ; 14) par un canal d'air évacué (28; 31) étant amenée au compartiment de séchage (12 ; 13) agencé directement devant le compartiment de séchage (13 ; 14) correspondant, l'air évacué chauffé dans le compartiment de séchage (14) agencé directement devant la chambre de refroidissement (16) étant introduit par un canal de liaison (28) séparé dans le compartiment de séchage (13) agencé directement devant ce compartiment de séchage (14), le canal de liaison (28) séparé étant réalisé sous la forme d'un canal de retour uniquement relié au compartiment de séchage (14) agencé directement devant la chambre de refroidissement (16) et au compartiment de séchage (13) agencé devant ce compartiment de séchage (14).

2. Séchoir à bande transporteuse selon la revendication 1, **caractérisé en ce qu'**une partie de l'air chauffé dans la chambre de refroidissement (16), dont le volume est dans chaque cas réglé ou peut au moins être réglé, est amenée à plusieurs des compartiments de séchage (12 ; 13 ; 14) montés en amont de la chambre de refroidissement (16) respectivement au moyen d'une conduite d'alimentation (22) bifurquant du canal d'air évacué (21).

3. Séchoir à bande transporteuse selon la revendication 2, **caractérisé en ce que** plusieurs compartiments de séchage (12 ; 13 ; 14) présentent chacun une entrée d'air (24), entrée d'air (24) à laquelle est raccordée dans chaque cas la conduite d'alimentation (22) respective bifurquant du canal d'air évacué (21).

4. Séchoir à bande transporteuse selon la revendication 3, **caractérisé en ce qu'**un ventilateur (27) est agencé dans chaque cas dans ou sur l'entrée d'air (24) correspondante, au moyen duquel ventilateur (27) l'air guidé à travers la conduite d'alimentation (22) respective, bifurquant du canal d'air évacué (21), est aspiré de la chambre de refroidissement (16).

5. Séchoir à bande transporteuse selon la revendication 1 et/ou 2 et/ou 3 et/ou 4, **caractérisé en ce que** la chaleur de traitement respective est réglée sur différentes températures dans au moins deux compartiments de séchage (12 ; 13 ; 14) différents.

6. Séchoir à bande transporteuse selon la revendication 1 et/ou 2 et/ou 3 et/ou 4 et/ou 5, **caractérisé en ce que** l'air est amené au compartiment de séchage (14) agencé directement devant la chambre de refroidissement (16) en passant par un canal d'alimentation (29) et en provenant d'une zone située entre ce compartiment de séchage (14) et la chambre de refroidissement (16) montée en aval de celui-ci.

7. Séchoir à bande transporteuse selon la revendication 1 et/ou 2 et/ou 3 et/ou 4 et/ou 5 et/ou 6, **caractérisé en ce que** le volume d'air évacué destiné à être amené par le canal d'air évacué (28; 31) correspondant, à partir du compartiment de séchage (13 ; 14) monté directement en aval, au compartiment de séchage (12 ; 13) agencé directement devant, est réglé dans chaque cas par un élément de réglage (23).

8. Séchoir à bande transporteuse selon la revendication 1 et/ou 2 et/ou 3 et/ou 4 et/ou 5 et/ou 6 et/ou 7, **caractérisé en ce qu'**un canal d'air d'alimentation (33) est raccordé à un premier compartiment de séchage (12) dans le sens de transport d'une bande de séchage (18) traversant la chambre de séchage (01), l'air provenant de l'environnement du séchoir à bande transporteuse étant guidé au moyen de ce canal d'air d'alimentation (33) dans ce premier compartiment de séchage (12).

9. Séchoir à bande transporteuse selon la revendication 8, **caractérisé en ce que** le volume d'air amené au premier compartiment de séchage (12) à partir de l'environnement du séchoir à bande transporteuse en passant par le canal d'air d'alimentation (33) est réglé au moyen d'un élément de réglage (23).

10. Séchoir à bande transporteuse selon la revendication 1 et/ou 2 et/ou 3 et/ou 4 et/ou 5 et/ou 6 et/ou 7 et/ou 8 et/ou 9, **caractérisé en ce que** la chambre de séchage (01) et la chambre de refroidissement (16) sont traversées chacune par une bande de séchage (18).

11. Séchoir à bande transporteuse selon la revendication 10, **caractérisé en ce que** des boîtes métalliques (17) peintes sont agencées sur la bande de séchage (18), ces boîtes métalliques (17) étant tout d'abord guidées dans la chambre de séchage (01) puis dans la chambre de refroidissement (16) au moyen de la bande de séchage (18).

12. Séchoir à bande transporteuse selon la revendication 11, **caractérisé en ce que** l'air amené de l'extérieur dans la chambre de refroidissement (16) à celle-ci est guidé contre les boîtes métalliques (17) préalablement chauffées dans les compartiments de séchage (12 ; 13 ; 14), ce courant d'air recevant une partie de l'énergie thermique de ces boîtes métalliques (17) et, ce faisant, refroidissant les boîtes métalliques (17) guidées à travers la chambre de refroidissement (16).

13. Séchoir à bande transporteuse selon la revendication 1 et/ou 2 et/ou 3 et/ou 4 et/ou 5 et/ou 6 et/ou 7 et/ou 8 et/ou 9 et/ou 10 et/ou 11 et/ou 12, **caractérisé en ce que** chacun des compartiments de séchage (12; 13; 14) comprend dans chaque cas un système d'air de circulation chauffé directement.

14. Séchoir à bande transporteuse selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13, **caractérisé en ce que** chacun des compartiments de séchage (12 ; 13 ; 14) comprend dans chaque cas un élément chauffant (09), l'élément chauffant (09) respectif, dans chaque compartiment de séchage (12 ; 13 ; 14), étant réglé ou pouvant au moins être réglé sur une température définie par une unité de commande (06) indépendamment de l'élément chauffant (09) dans un autre compartiment de séchage (12 ; 13 ; 14).

15. Séchoir à bande transporteuse selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13 et/ou 14, **caractérisé en ce que** le canal de liaison (28) séparé ne présente pas de bifurcation menant à l'environnement du séchoir à bande transporteuse ou sortant d'un bâtiment, bâtiment dans lequel le séchoir à bande transporteuse est installé.
